(19) Europäisches Patentamt European Patent Office Office européen des brevets

(11) **EP 1 816 452 B1**

(12) **EUROPEAN PATENT SPECIFICATION**

(45) Date of publication and mention
of the grant of the patent:
**29.02.2012 Bulletin 2012/09**

(51) Int Cl.:
***G01H 3/12*** (2006.01)

(21) Application number: **07101515.0**

(22) Date of filing: **31.01.2007**

(54) **Analysis method for sound or vibration and analyzing apparatus for sound or vibration**

Verfahren und Vorrichtung zur Analyse von Schall oder Vibration

Procédé d'analyse du son ou des vibrations et appareil d'analyse du son ou des vibrations

(84) Designated Contracting States:
**DE FR**

(30) Priority: **01.02.2006 JP 2006025155**

(43) Date of publication of application:
**08.08.2007 Bulletin 2007/32**

(73) Proprietors:
• **JTEKT CORPORATION**
**Osaka-shi**
**Osaka 542-8502 (JP)**
• **Zhang, Zhong**
**Kitayama-cho**
**Toyohashi-shi**
**Aichi 441-8105 (JP)**

(72) Inventors:
• **Zhang, Zhong**
**Toyohashi-shi Aichi 441-8105 (JP)**
• **Ishii, Hideaki**
**Osaka-shi Osaka 542-8502 (JP)**
• **Uemura, Hiroshi**
**Osaka-shi Osaka 542-8502 (JP)**

(74) Representative: **de Beaumont, Michel**
**1bis, rue Champollion**
**38000 Grenoble (FR)**

(56) References cited:
**JP-A- 2000 214 052      JP-A- 2004 101 413**
**JP-A- 2004 212 331      US-A- 3 946 600**
**US-B1- 6 176 136**

**Description**

BACKGROUND OF THE INVENTION

The present invention relates to an analysis method and an analyzing apparatus for identifying which of a plurality of sound sources or vibration sources located in a target space or its periphery causes noise or vibration at an evaluation point within the target space.

Identification of a generation source of noise or vibration that appears at an evaluation point within a space is an important issue in various fields of industry. For example, reduction in the internal noise of a car cabin, especially in the noise heard by passengers in a car cabin, is important in the improvement of the passengers' comfortableness. For this purpose, a sound source or a vibration source of the target noise need be identified, and then an effective countermeasure need be taken against this sound source or vibration source.

A large number of analysis methods for sound or vibration for identifying such a sound source or a vibration source have been proposed in the prior art. A widely adopted analysis method for sound or vibration is a method based on the FFT (Fast Fourier Transform). In this method, a detection result of sound or vibration acquired as a waveform signal is processed by Fourier transformation, so that spectral intensity is obtained for each frequency component. Each of a detection signal of sound or vibration at an evaluation point set up in a target space and detection signals of sound or vibration at a plurality of candidate points expected to be a sound source or a vibration source is processed by Fourier transformation. Then, the spectrum distribution at each candidate point is compared with the spectrum distribution at the evaluation point, so that a sound source or a vibration source is identified.

Further, analysis methods for noise in a car cabin have been proposed in which noise is detected at an evaluation point inside a car cabin while sound or vibration is detected at a plurality of candidate points in the inside or the periphery of the car cabin, and in which the detection signal at each candidate point is filtered through an adaptive filter the filter coefficient of which is changed in accordance with the residual from the detection signal at the evaluation point, so that the degree of contribution of each candidate point is obtained on the basis of this result (see, for example, Japanese Patent Application Laid-Open No. H7-243906 and Japanese Patent Application Laid-Open No. H11-94642).

BRIEF SUMMARY OF THE INVENTION

Nevertheless, these conventional analysis methods do not utilize time information, and hence have a problem that when sound or vibration in the same or near frequency range is detected at a plurality of candidate points, a generation source of the sound or vibration that appears at the evaluation point is difficult to be identified correctly. Thus, even when a countermeasure is taken at any one of the plurality of candidate points, the taken countermeasure could be at a candidate point other than the actual sound source or vibration source, so that the reduction effect for sound or vibration could be insufficient at the evaluation point. In contrast, if countermeasures were taken at all of the plurality of candidate points, this would disadvantageously cause excessive countermeasures even at unnecessary candidate points.

The present invention has been devised in view of this situation. An object of the present invention is to provide an analysis method and an analyzing apparatus for sound or vibration in which an analysis method utilizing time information is adopted, so that a generation source of sound or vibration that appears at an evaluation point is identified correctly. This permits countermeasure against sound or vibration without excess or deficiency, and hence realizes reliable reduction in the sound or vibration at the evaluation point.

The analysis method for sound or vibration according to the present invention is an analysis method for sound or vibration for identifying a generation source of sound or vibration that appears at an evaluation point in a target space from among a plurality of candidate points located in the target space and a periphery thereof, characterized by comprising: a first step of extracting an evaluation waveform signal from a detection result of sound or vibration at the evaluation point; a second step of extracting a plurality of candidate waveform signals having the same time axis as the evaluation waveform signal from respective detection results of sound or vibration at the plurality of candidate points; a third step of deriving a mother wavelet from the evaluation waveform signal extracted at the first step; and a fourth step of performing wavelet transformation on each of the plurality of candidate waveform signals extracted at the second step by using the mother wavelet derived at the third step so as to obtain instantaneous correlation between each candidate waveform signal and the mother wavelet.

The analyzing apparatus for sound or vibration according to the present invention is an analyzing apparatus for sound or vibration for identifying a generation source of sound or vibration that appears at an evaluation point in a target space from among a plurality of candidate points located in the target space and a periphery thereof, comprising: detecting means for sound or vibration arranged at each of the evaluation point and the plurality of candidate points; first extracting means for extracting an evaluation waveform signal from the detection result of the detecting means arranged at the evaluation point; second extracting means for extracting a plurality of candidate waveform signals having the same time axis as the evaluation waveform signal from the respective detection results of the detecting means arranged at the plurality of candidate points; deriving means for deriving a mother wavelet from the evaluation waveform signal extracted by the first extracting means; correlation calculating means for performing wavelet transformation on each of the plurality of candidate waveform signals extracted by the second extracting means by using the mother wavelet derived by the deriving means so as to calculate instantaneous correlation between each candidate waveform signal and the mother wavelet; and output means for outputting the degree of contribution of each of the plurality of candidate points for sound or vibration of the evaluation point on the basis of mutual comparison of the calculation results of the correlation calculating means.

In the analysis method and the analyzing apparatus for sound or vibration according to the present invention, a mother wavelet is derived from the evaluation waveform signal acquired at the evaluation point. Then, the candidate waveform signal acquired at each candidate point is processed by wavelet transformation using the mother wavelet, so that instantaneous correlation of each candidate waveform signal is calculated. Thus, an analysis result including time information is obtained, so that a generation source of sound or vibration that appears at the evaluation point can correctly be identified among the plurality of candidate points. Thus, when a countermeasure against the sound or vibration is taken at the identified candidate point, the sound or vibration can reliably be reduced at the evaluation point.

The above and further objects and features of the invention will more fully be apparent from the following detailed description with accompanying drawings.

BRIEF DESCRIPTION OF THE SEVERAL VIEWS OF THE DRAWINGS

FIG. 1 is an explanatory view showing a state of implementation of an analysis method for sound or vibration according to the present invention;
FIG. 2 is a block diagram showing an internal configuration of an analyzing apparatus;
FIG. 3 is a flow chart showing a procedure of implementation of a sound or vibration analysis method according to the present invention performed in the analyzing apparatus;
FIG. 4A is a diagram showing an example of an evaluation waveform signal;
FIGS. 4B-4D are diagrams each showing an example of a candidate waveform signal;
FIG. 5 is a flow chart showing a procedure of derivation of a mother wavelet; and
FIGS. 6A-6C are diagrams each showing a display example of an instantaneous correlation value.

DETAILED DESCRIPTION OF THE INVENTION

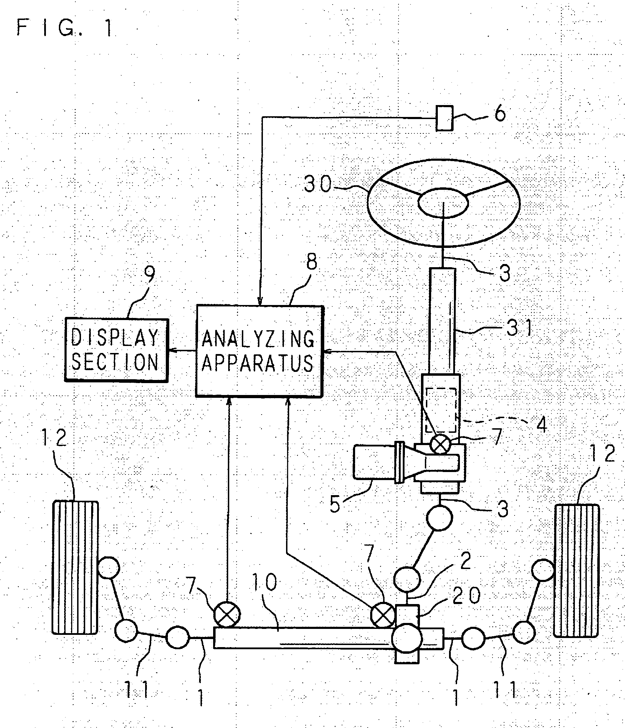

The present invention is described below in detail with reference to the drawings showing an embodiment. FIG. 1 is an explanatory view showing a state of implementation of an analysis method for sound or vibration according to the present invention. This figure shows a state of implementation of an analysis method for identifying which of the vibration sources present in various sections of an electric power steering device provided in an automobile causes the noise generated inside the car cabin.

The electric power steering device shown in FIG. 1 has a steering mechanism of rack and pinion type provided with a rack shaft 1 supported in a movable manner in the axial length direction in the inside of a rack housing 10 that extends in the right and left directions of a car body and with a pinion shaft 2 supported in a rotatable manner in the inside of a pinion housing 20 that intersects with the middle of the rack housing 10.

The two ends of the rack shaft 1 that protrude outward from both sides of the rack housing 10 are linked through tie rods 11 and 11 respectively to right and left front wheels 12 and 12 serving as steerable wheel. The upper end of the pinion shaft 2 that protrudes to the outside of the pinion housing 20 is linked through a steering shaft 3 to a steering wheel 30 serving as a steering member. Further, a pinion (not shown) is formed in the lower part of the pinion shaft 2 that extends inside the pinion housing 20. In a part intersecting with the rack housing 10, the pinion engages with the rack teeth formed over an appropriate length on the external surface of the rack shaft 1.

The steering shaft 3 is supported in a rotatable manner inside a column housing 31 having a cylinder shape, and then fixed inside the car cabin via the column housing 31 in an inclined arrangement with the front side down. A protruding end of the steering shaft 3 toward the lower side of the column housing 31 is linked to the pinion shaft 2, while a protruding end toward the upper side is fixed to the steering wheel 30.

According to this configuration, when the steering wheel 30 is operated and rotated for steering, the rotation is transmitted to the pinion shaft 2 via the steering shaft 3. Then, the rotation of the pinion shaft 2 is converted into movement in the axial length direction of the rack shaft 1 in the engagement part between the pinion and the rack teeth. According to this movement of the rack shaft 1, the right and the left front wheels 12 and 12 are pushed and pulled respectively by the individual tie rods 11 and 11, so that steering is achieved.

In the middle of the column housing 31 that supports the steering shaft 3, a torque sensor 4 is provided for detecting a steering torque applied to the steering shaft 3 by the rotary operation of the steering wheel 30. Further, a steering assistance motor 5 is attached at a position lower than the torque sensor 4.

The torque sensor 4 has a publicly known configuration in which the steering shaft 3 serving as the target for detection is divided into two up and down shafts while these two shafts are linked together on the same axis with a torsion bar having known torsion characteristics, and in which relative angular displacement generated by the operation of a steering torque between the two shafts that associates with a torsion in the torsion bar is detected by appropriate means. Further, the steering assistance motor 5 is attached outside the column housing 31 in a manner that its shaft axes intersect with each other approximately at rectangles. For example, in a transmission configuration, a worm fixed to the output end that extends inside the column housing 31 engages with the worm wheel fit and fixed to the outside of the steering shaft 3, so that the rotation of the motor 5 is transmitted to the steering shaft 3 with predetermined speed reduction via a transmission mechanism provided with a worm and a worm wheel.

The steering assistance motor 5 attached in this manner is driven in accordance with the direction and the magnitude of the steering torque detected by the torque sensor 4. At that time, the rotating force generated by the motor 5 is applied to the pinion shaft 2 linked to the lower end of the steering shaft 3, so that the rotating force assists the steering performed as described above.

In the electric power steering device having this configuration, when the above-mentioned steering is performed in accordance with a rotary operation of the steering wheel 30, vibration occurs in the periphery of a part in which relative displacement is generated between the members, like in the periphery of the transmission mechanism that transmits the rotation of the steering assistance motor 5 to the steering shaft 3 with speed reduction, the periphery of the engagement part between the pinion shaft 2 and the rack shaft 1, and the periphery of the support part for supporting the rack shaft 1 in a slidable manner at one side-end part of the rack housing 10. This vibration propagates to the car cabin, and is then heard as noise by a driver who operates the steering wheel 30.

The analysis method for sound or vibration according to the present invention is implemented in order to identify a generation source of the noise generated as described above. An evaluation point is defined at an appropriate position inside the car cabin, preferably, in the periphery of the driver who operates the steering wheel 30. Then, a microphone 6 for noise detection is arranged at this evaluation point, while detectors 7, 7,... for detecting sound or vibration are arranged respectively at candidate points expected to be a generation source of this noise. Further, an analyzing apparatus 8 receives the detection signals from the microphone 6 and the detectors 7, 7,....

In the embodiment shown in the drawings, candidate points are in the periphery of the transmission mechanism from the steering assistance motor 5 to the steering shaft 3, the periphery of the engagement part between the pinion shaft 2 and the rack shaft 1, and the periphery of the support part of the rack shaft 1 of one side-end part of the rack housing 10. Then, the vibration at each candidate point is detected by each of the individual detectors 7, 7,.... However, the number and the positions of the candidate points may be set up appropriately.

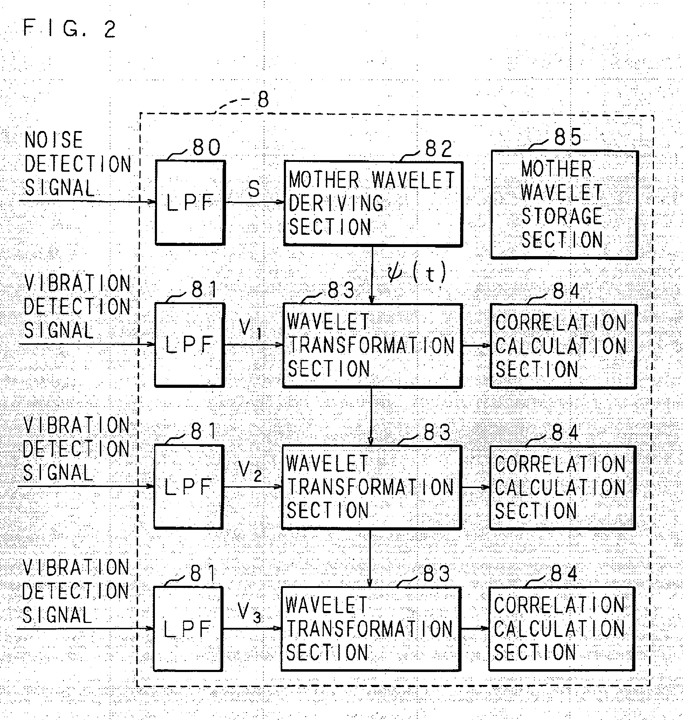

FIG. 2 is a block diagram showing an internal configuration of the analyzing apparatus 8. The analyzing apparatus 8 includes: a low pass filter 80 corresponding to the microphone 6; low pass filters 81, 81,... respectively corresponding to the detectors 7, 7,...; a mother wavelet deriving section 82; wavelet transformation sections 83, 83,...; and correlation calculation sections 84, 84,.... Such an analyzing apparatus 8 is provided with a display section 9 for displaying the progress of the analysis and the analysis result, as shown in FIG. 1.

A noise detection signal at the evaluation point acquired by the microphone 6 is filtered by the low pass filter 80. Vibration detection signals at individual candidate points acquired by the detectors 7, 7,... are filtered by the individual low pass filters 81, 81,.... As a result, waveform signals in which high frequency noise is removed are extracted. In the following description, the waveform signal extracted by filtering the detection signal acquired by the microphone 6 arranged at the evaluation point is denoted by the evaluation waveform signal S. Each of the waveform signals extracted by filtering the detection signals acquired by the detectors 7, 7,... arranged at the candidate points is denoted by the candidate waveform signal V.

Here, in FIG. 2, each of the low pass filters 81, 81,... is assigned to each of the detectors 7, 7,.... However, a detector 7 capable of detecting the vibration in the three directions of X, Y, and Z may be arranged at each of the three candidate points, so that the vibration in each direction may be processed individually. In this case, nine low pass filters 81, 81,... are necessary.

In the following description, for simplicity, it is assumed that vibration detection in one direction is performed at each candidate point. After the filtering by the low pass filter 80, one evaluation waveform signal S corresponding to the noise at the evaluation point is extracted. Further, after the filtering by the low pass filters 81, 81,and 81, three candidate waveform signals $V_1$, $V_2$, and $V_3$ respectively corresponding to the vibration at the three candidate points are extracted. The evaluation waveform signal S is provided to the mother wavelet deriving section 82. The candidate waveform signals $V_1$, $V_2$, and $V_3$ are respectively provided through the wavelet transformation sections 83, 83,and 83 to the correlation calculation sections 84, 84, and 84.

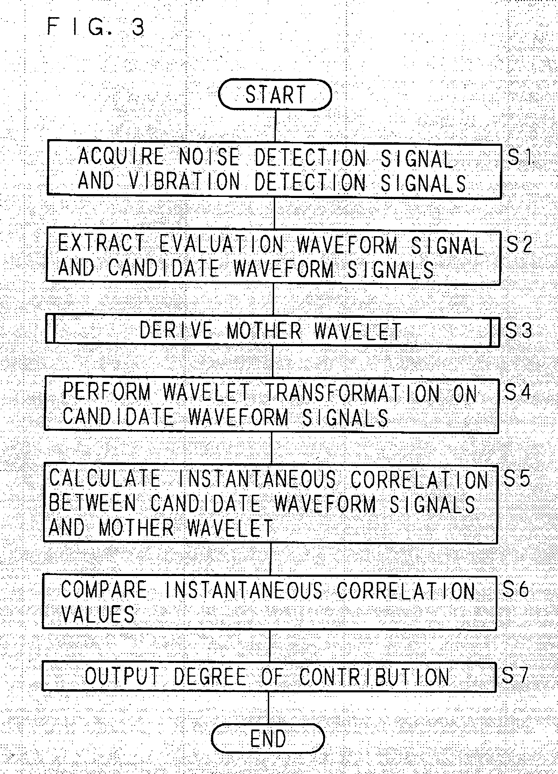

FIG. 3 is a flow chart showing a procedure of implementation of a sound or vibration analysis method according to the present invention performed in the analyzing apparatus 8. Here, the analyzing apparatus 8 in FIG. 2 is illustrated as shown in the block diagram. However, the analyzing apparatus 8 is actually constructed from an arithmetic processing unit composed of a CPU (Central Processing Unit), a ROM (Read Only Memory), a RAM (Random Access Memory), and the like. The following procedure shown as functional blocks executed in the mother wavelet deriving section 82, the wavelet transformation sections 83, 83,..., and the correlation calculation sections 84, 84,... are performed as the operation of the CPU in accordance with a program stored in the ROM. Alternatively, a computer program recorded on an appropriate recording medium may be loaded to a general-purpose computer, so that the analyzing apparatus 8 may be implemented.

The analyzing apparatus 8 monitors a noise detection signal at the evaluation point acquired by the microphone 6. Then, when a detection signal serving as the target for detection is generated, the analyzing apparatus 8 acquires the noise detection signal together with the vibration detection signals at individual candidate points acquired by the detectors 7, 7,... (Step 1). Then, the analyzing apparatus 8 filters these detection signals, and thereby extracts an evaluation waveform signal and candidate waveform signals (Step 2). Here, the acquisition of the detection signal by the microphone 6 and the acquisition of the detection signals by the detectors 7, 7,... are performed simultaneously. However, since the processing of the following procedure is performed within the CPU, the result can be outputted in real time and displayed on the display section 9. Alternatively, the microphone 6 may serve as a vibration sensor, while the detector 7 may serve as a microphone.

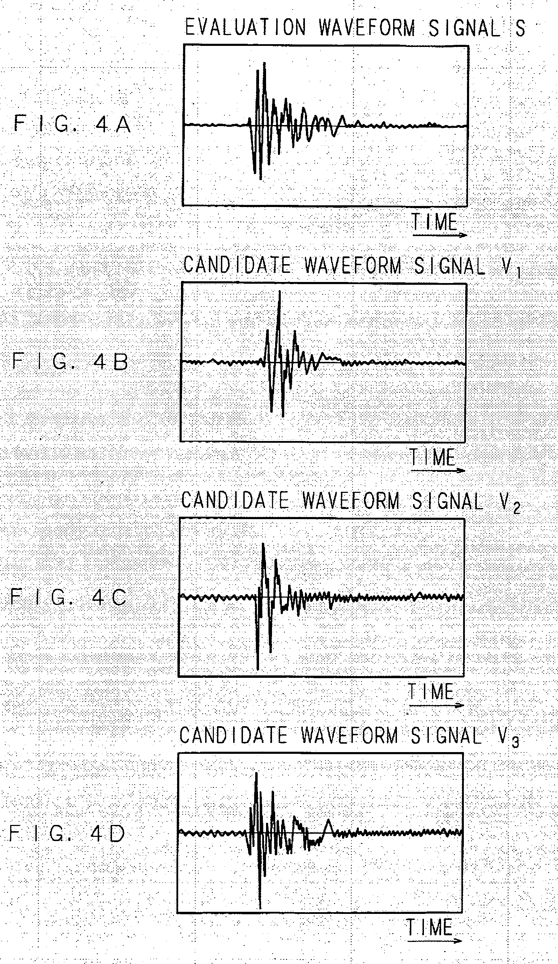

FIGS. 4A-4D are diagrams showing examples of the evaluation waveform signal and the candidate waveform signals. In this figure, the horizontal axis indicates the time, while the vertical axis indicates the amplitude. In correspondence to the evaluation waveform signal S shown in FIG. 4A, three candidate waveform signals $V_1$, $V_2$, and $V_3$ having the same time axis are extracted as shown in FIGS. 4B-4D.

Then, the analyzing apparatus 8 derives a real signal mother wavelet from the evaluation waveform signal S extracted at step 2 (Step 3). In the derivation of the real signal mother wavelet performed in the following procedure, a waveform is used that is within a range satisfying a predetermined magnitude condition among the evaluation waveform signal S. In the selection of the use range, for example, the evaluation waveform signal S may be displayed on the display section 9 in a manner shown in FIG. 4A, and then the selection may be performed by an operator who recognizes visually this display. Alternatively, a predetermined magnitude condition may be stored in the RAM of the analyzing apparatus 8 in advance, and then a use range satisfying this magnitude condition may be selected automatically.

A real signal mother wavelet $\Psi(t)$ is a function given by the following Eq. (1). Quantity a in this Eq. (1) is a scale parameter corresponding to the inverse of the frequency, while b is a time parameter. In the following description, the adjunctive phrase "real signal" is omitted, so that the function is simply referred to as a mother wavelet $\Psi(t)$.

[Equation 1]

$$\psi_{a,b}(t) = \frac{1}{\sqrt{a}} \psi\left(\frac{t-b}{a}\right) \quad \dots \ (1)$$

The mother wavelet $\Psi(t)$ need satisfy an admissible condition given by Eq. (2) in order that reconstruction of the signal should be possible. Here, $\Psi(\omega)$ hat denotes the Fourier transform of the mother wavelet $\Psi(t)$.

[Equation 2]

$$C_\psi = \int_{-\infty}^{\infty} \frac{\left|\hat{\psi}(\varpi)\right|^2}{|\varpi|} d\varpi < \propto \quad \dots \ (2)$$

$$\varpi = 2\pi f$$

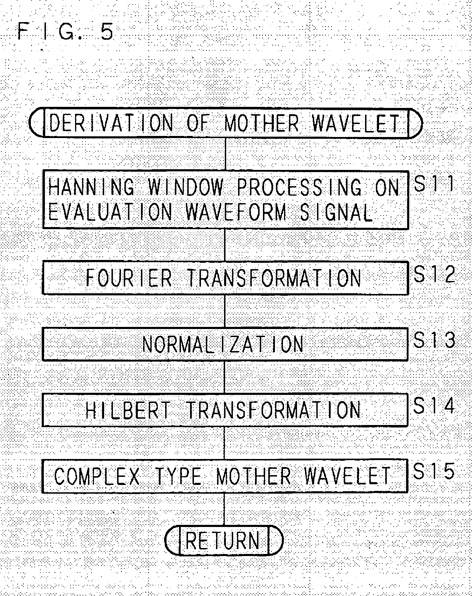

FIG. 5 is a flow chart showing the procedure of derivation of the mother wavelet $\Psi(t)$. In the analyzing apparatus 8, the evaluation waveform signal S is provided, and then the use range is selected as described above. After that, Hanning window processing is performed on the waveform signal within the selected range in order that the condition of Eq. (2) should be satisfied (Step 11). Then, Fourier transformation is performed (Step 12). The mother wavelet $\Psi(t)$ derived in this manner has a start point and an end point at zeros. Further, its average over the domain is zero, while the function is bounded.

Next, the analyzing apparatus 8 performs normalization on the derived mother wavelet Ψ(t) in such a manner that the norm should be unity as given by Eq. (3) (Step 13). In order that the feature should easily be recognized in the analysis of sound or vibration, it is preferable that a mother wavelet of complex type is used in place of that of real type. Thus, the analyzing apparatus 8 performs Hilbert transformation on the real type mother wavelet obtained by the normalization at Step 13 (Step 14), thereby constructs a complex type mother wavelet (Step 15), and then completes a series of derivation procedure of the mother wavelet Ψ(t). Here, obviously, the real type mother wavelet Ψ_R(t) obtained at Step 13 may be used.

## [Equation 3]

$$\| \psi \| = \left[ \int_{-\infty}^{\infty} \psi(t)^2 \, dt \right]^{\frac{1}{2}} = 1 \quad \dots \ (3)$$

The complex type mother wavelet Ψ(t) is given by Eq. (4). The real type mother wavelet Ψ_R(t) is processed by Fourier transformation, so that the frequency spectrum Ψ_R(f) hat is obtained. The inverse Fourier transformation is performed in a state that Ψ_R(f) hat is replaced to zero in the negative frequency domain while Ψ_R(f) hat is replaced by 2Ψ_R(f) hat in the positive frequency domain.

## [Equation 4]

$$\psi(t) = \psi_R(t) + j \psi_I(t) \quad \dots \ (4)$$

On completion of derivation of the mother wavelet Ψ(t) in accordance with the above-mentioned procedure, the analyzing apparatus 8 performs wavelet transformation respectively on the candidate waveform signals $V_1$, $V_2$, and $V_3$ given as shown in FIGS. 4B-4D (Step 4). Then, on the basis of this result, the analyzing apparatus 8 calculates instantaneous correlation between the candidate waveform signals $V_1$, $V_2$, and $V_3$, and the mother wavelet Ψ(t) (Step 5).

In the wavelet transformation at Step 4, the wavelet transformation formula expressed by Eq. (5) is used, which contains the mother wavelet Ψ(t) derived from the evaluation waveform signal S at Step 3. Then, each of the candidate waveform signals $V_1$, $V_2$, and $V_3$ is applied to the transform function f(t) in this equation, so that the transformation is performed. Here, Ψ*(t) in Eq. (5) denotes the complex conjugate of the mother wavelet Ψ(t).

## [Equation 5]

$$W(a,b) = \int_{-\infty}^{\infty} f(t) \psi_{a,b}^{*}(t) \, dt \quad \dots \ (5)$$

The wavelet transformation performed as described above is the processing of obtaining the inner product between the transform function f(t) to which each of the candidate waveform signals $V_1$, $V_2$, and $V_3$ is applied and the mother wavelet Ψ(t). When the transform function f(t) agrees with the mother wavelet Ψ(t), the inner product is unity, while when disagrees, the inner product is zero. In a state that the scale parameter a=1 in Eq. (1) is set up to be the center frequency, when the time parameter b is changed variously, correlation between the evaluation waveform signal S and each of the candidate waveform signals $V_1$, $V_2$, and $V_3$ becomes clear on the time axis.

The mother wavelet Ψ(t) is normalized. Thus, when the candidate waveform signals $V_1$, $V_2$, and $V_3$ applied to the transform function f(t) are larger than the mother wavelet Ψ(t), the correlation values become larger than unity in accordance with the ratio. Further, correlation can be obtained also for a frequency component of the mother wavelet Ψ(t). As such, for each of the three candidate waveform signals $V_1$, $V_2$, and $V_3$ sequentially applied to the transform function f(t), instantaneous correlation can be obtained that indicates the degree of correlation including the component and the magnitude with respect to the evaluation waveform signal S used in the derivation of the mother wavelet Ψ(t).

The mother wavelet $\Psi(t)$ is derived on the basis of the detection result of the noise acquired actually at the evaluation point. Thus, the instantaneous correlation calculated at Step 5 for each of the plurality of candidate waveform signals $V_1$, $V_2$, and $V_3$ processed by wavelet transformation at Step 4 expresses correctly the correlation relation of the sound or vibration (vibration in this embodiment) detected at each candidate point with the noise at the evaluation point. Further, the result of the wavelet transformation contains time information, and hence the generation time can also be determined. Thus, even when the plurality of candidate waveform signals $V_1$, $V_2$, and $V_3$ contain the same frequency component, the difference becomes clear in the degree of correlation of each signal with the evaluation waveform signal S.

On completion of the wavelet transformation at Step 4, the analyzing apparatus 8 compares with each other the instantaneous correlation values calculated respectively for the three candidate waveform signals $V_1$, $V_2$, and $V_3$ (Step 6), then outputs the degree of contribution of vibration detected at the plurality of candidate points relative to the noise detected at the evaluation point (Step 7), and then completes the analysis operation.

Here, when the target noise or vibration is known in advance, or alternatively with the mother wavelet has already been derived, Steps 1 and 3 may be skipped, while the derived mother wavelet may be stored in a mother wavelet storage section 85 (see FIG. 2) employing a memory in the CPU, so that the analysis may be performed.

Output of the degree of contribution may be performed by appropriate means. For example, the instantaneous correlation values calculated for the plurality of candidate waveform signals may be expressed into the form of graphs and then displayed on the display section 9. Then, an operator who recognizes visually this display may determine the degree of contribution.

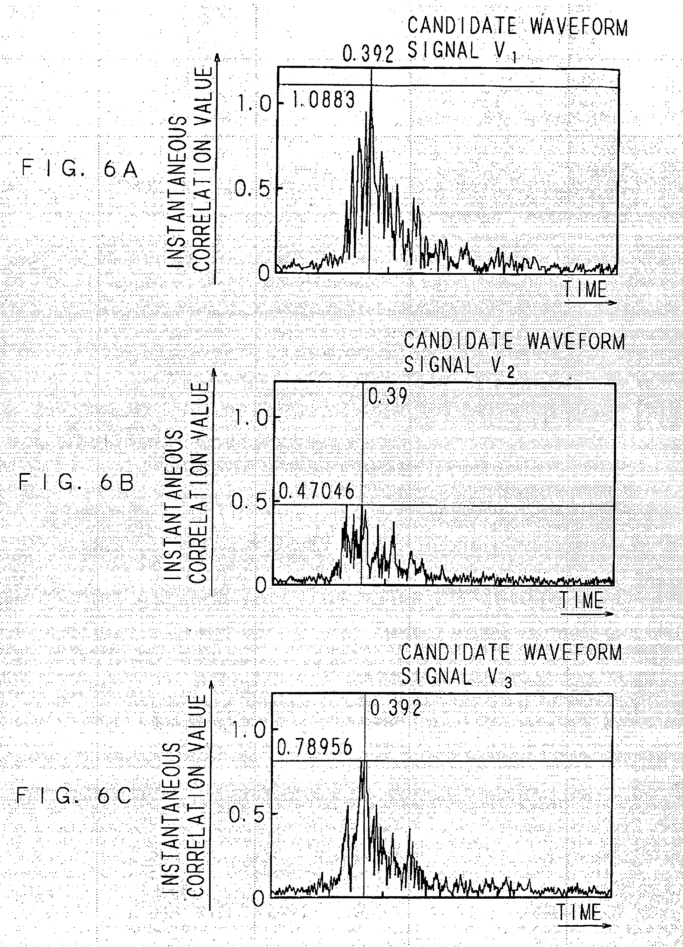

FIGS. 6A-6C are diagrams showing examples of display of the instantaneous correlation values, where the instantaneous correlation values calculated for the three candidate waveform signals $V_1$, $V_2$, and $V_3$ given as described above are displayed in the form of graphs on the same time axis. In general, the instantaneous correlation value of the candidate waveform signal $V_1$ shown in FIG. 6A is large. This indicates obviously that the noise detected at the evaluation point is caused mainly by the vibration at the candidate point where the candidate waveform signal $V_1$ is obtained. Thus, in order to suppress the noise at the evaluation point, a countermeasure for vibration suppression at this candidate point is effective.

Further, in general, the instantaneous correlation value of the candidate waveform signal $V_2$ shown in FIG. 6B is small. Thus, a countermeasure for vibration reduction at the candidate point where the candidate waveform signal $V_2$ is obtained is determined as unnecessary for the noise suppression at the evaluation point. This avoids the implementation of the unnecessary countermeasure.

The above-mentioned embodiment has been described for an example of analysis performed for identifying a generation source of the noise caused in a car cabin by vibration generated in various sections of an electric power steering device. However, the analysis method and the analyzing apparatus according to the present invention is applicable to a general use for identifying a generation source of sound or vibration that appears at an evaluation point in a target space from among a plurality of candidate points. Thus, obviously, the present invention can be used widely in various fields of industry.

**Claims**

1. An analysis method for sound or vibration for identifying which of the vibration sources, which are candidate points, present in various sections of an electric power steering device provided in an automobile causes the noise generated inside the car cabin that appears at an evaluation point in the periphery of a steering wheel, comprising:

   a first step (S2) of extracting an evaluation waveform signal from a detection result of sound or vibration at the evaluation point;
   a second step (S2) of extracting a plurality of candidate waveform signals having the same time axis as the evaluation waveform signal from respective detection results of sound or vibration at the plurality of candidate points;
   a third step (S3) of deriving a mother wavelet from the evaluation waveform signal extracted at said first step (S2); and
   a fourth step (S4, S5) of performing wavelet transformation on each of the plurality of candidate waveform signals extracted at said second step (S2) by using the mother wavelet derived at said third step (S3) so as to obtain instantaneous correlation between each candidate waveform signal and the mother wavelet.

2. The analysis method for sound or vibration according to claim 1, further comprising a fifth step (S6, S7) of outputting the degree of contribution of each of the plurality of candidate points for sound or vibration of the evaluation point on the basis of mutual comparison of the instantaneous correlation obtained at said fourth step (S4, S5).

3. The analysis method for sound or vibration according to claim 1 or 2, wherein
the mother wavelet derived at said third step (S3) is a mother wavelet of complex type.

4. The analysis method for sound or vibration according to claim 1, wherein said third step (S3) further comprises steps of
a step (S11) of performing Hanning window processing on the evaluation waveform signal;
a step (S12) of performing Fourier transformation;
a step (S13) of performing normalization; and
a step (S 14) of performing Hilbert transformation.

5. The analysis method for sound or vibration according to claim 1, wherein said fourth step (S4) comprises a process of obtaining an inner product between a transform function to which each of the candidate waveform signals is applied and the mother wavelet derived from the evaluation signal at said third step (S3).

6. An analyzing apparatus for sound or vibration for identifying a generation source of sound or vibration that appears at an evaluation point in a target space from among a plurality of candidate points located in the target space and a periphery thereof, adapted to implement the analysis method according to any of claims 1 to 5, comprising:

  detecting means (6, 7) for sound or vibration arranged at each of the evaluation point and the plurality of candidate points;
  first extracting means (80) for extracting an evaluation waveform signal from the detection result of said detecting means (6) arranged at the evaluation point;
  second extracting means (81) for extracting a plurality of candidate waveform signals having the same time axis as the evaluation waveform signal from the respective detection results of said detecting means (7) arranged at the plurality of candidate points;
  deriving means (82) for deriving a mother wavelet from the evaluation waveform signal extracted by said first extracting means (80);
  correlation calculating means (83, 84) for performing wavelet transformation on each of the plurality of candidate waveform signals extracted by said second extracting means (81) by using the mother wavelet derived by said deriving means (82) so as to calculate instantaneous correlation between each candidate waveform signal and the mother wavelet; and
  output means (9) for outputting the degree of contribution of each of the plurality of candidate points for sound or vibration of the evaluation point on the basis of mutual comparison of the calculation results of said correlation calculating means (83, 84).

7. The analyzing apparatus for sound or vibration according to claim 6, wherein
the derived mother wavelet is a mother wavelet of complex type.

8. The analyzing apparatus for sound or vibration according to any one of claims 6-7, wherein
said output means (9) displays on the same time axis the instantaneous correlation calculated by said correlation calculating means (83, 84).

**Patentansprüche**

1. Ein Analyseverfahren hinsichtlich Ton oder Vibration (Schwingung) zur Identifizierung, welche der Vibrationsquellen, die Kandidatenpunkte sind, vorkommend in verschiedenen Abschnitten einer in einem Automobil vorgesehenen elektrischen Servolenkvorrichtung, das Geräusch innerhalb einer Fahrzeugkabine erzeugen, welches an einem Auswertungspunkt in der Peripherie eines Lenkrads erscheint, wobei folgendes vorgesehen ist:

  ein erster Schritt (S2) des Ermittelns (Extrahierens) eines Auswertungswellenformsignals aus einem Detektionsresultat von Ton oder Vibration an dem Auswertungspunkt;
  einen zweiten Schritt (S2) des Ermittelns einer Vielzahl von Kandidatenwellenformsignalen mit der gleichen Zeitachse wie das Auswertungswellenformsignal, und zwar aus entsprechenden Detektionsresultaten von Ton oder Vibration an der Vielzahl von Kandidatenpunkten;
  einen dritten Schritt (S3) zur Ableitung einer Mutterwellenform aus dem Auswertungswellenformsignal ermittelt im ersten Schritt (S2); und
  einen vierten Schritt (S4, S5) der Ausführung einer Wellenform-Transformation an jedem der Vielzahl von Kandidatenwellenformsignalen ermittelt im zweiten Schritt (S2) unter Verwendung der Mutterwellenform abgeleitet an dem dritten Schritt (S3), um so eine augenblickliche Korrelation zwischen jedem Kandidatenwellenformsignal und der Mutterwellenform zu erhalten.

2. Das Analyseverfahren für Ton oder Vibration nach Anspruch 1, wobei ferner folgendes vorgesehen ist:

ein fünfter Schritt (S6, S7) der Ausgabe des Ausmaßes des Beitrags jedes der Vielzahl von Kandidatenpunkten für Ton oder Vibration des Auswertungspunktes auf der Basis gegenseitigen Vergleichs der augenblicklichen Korrelation erhalten an dem erwähnten vierten Schritt (S4, S5).

3. Das Analyseverfahren für Ton oder Vibration nach Anspruch 1 oder 2, wobei die Mutterwellenform abgeleitet in einem dritten Schritt (S3) eine Mutterwellenform komplexer Art ist.

4. Das Analyseverfahren für Ton oder Vibration nach Anspruch 1, wobei der dritte Schritt (S3) ferner die folgende Schritte aufweist:

einen Schritt (S11) zur Durchführung einer Hanning-Fensterverarbeitung an dem Auswertungswellenformsignal;
einen Schritt (S12) zur Durchführung einer Fourier-Transformation;
einen Schritt (S13) zur Durchführung einer Normalisierung; und
einen Schritt (S14) zur Durchführung einer Hilbert-Transformation.

5. Das Analyseverfahren für Ton oder Vibration nach Anspruch 1, wobei der vierte Schritt (S4) folgendes aufweist:

einen Prozess des Erhalts eines Innenproduktes zwischen einer Transformationsfunktion, der auf jedes der Kandidatenwellenformsignale angewendet wird, und der Mutterwellenform abgeleitet aus dem Auswertungssignal bei dem erwähnten dritten Schritt (S3).

6. Eine Analysevorrichtung für Ton oder Vibration zur Identifikation einer Erzeugungsquelle von Ton oder Vibration, die an einem Auswertungspunkt in einem Zielraum erscheint, und zwar aus einer Vielzahl von Kandidatenpunkten, angeordnet in dem Zielraum und einem Umfang oder einer Peripherie davon, und zwar geeignet zur Durchführung des Analyseverfahrens gemäß einem der Ansprüche 1 bis 5, wobei folgendes vorgesehen ist:

Detektiermittel (6, 7) für Ton oder Vibration angeordnet an jedem Auswertungspunkt und der Vielzahl von Kandidatenpunkten;
erste Extraktionsmittel (80) zum Herausziehen oder Extrahieren eines Auswertwellenformsignals aus dem Detektionsresultat der erwähnten Detektionsmittel (6) angeordnet an dem Auswertungspunkt;
zweite Extraktionsmittel (81) zum Herausziehen einer Vielzahl von Kandidatenwellenformsignalen mit der gleichen Zeitachse wie das Auswertungswellenformsignal aus den entsprechenden Detektionsresultaten der erwähnten Detektionsmittel (7) angeordnet an der Vielzahl von Kandidatenpunkten;
Ableitmittel (82) zum Ableiten einer Mutterwellenform aus dem Auswertungswellenformsignal herausgezogen durch die ersten Extraktionsmittel (80);
Korrelationsberechnungsmittel (83, 84) zur Durchführung einer Wellenformtransformation an jedem der Vielzahl von Kandidatenwellenformsignalen herausgezogen aus den erwähnten zweiten Extraktionsmitteln (81) unter Verwendung der Mutterwellenform, abgeleitet durch die Ableitmittel (82), um so die augenblickliche Korrelation zwischen jedem der Kandidatenwellenformsignal und der Mutterwellenform zu berechnen; und
Ausgangsmittel (9) zur Ausgabe des Ausmaßes des Beitrags jedes der Vielzahl von Kandidatenpunkten für Ton oder Vibration des Auswertungspunkts auf der Basis eines gegenseitigen Vergleichs der Berechnungsergebnisse der Korrelationsberechnungsmittel (83, 84).

7. Analysevorrichtung für Ton oder Vibration nach Anspruch 6, wobei die abgeleitete Mutterwellenform eine Mutterwellenform komplexen Typs ist.

8. Analysevorrichtung für Ton oder Vibration nach einem der Ansprüche 6 bis 7, wobei die Ausgabemittel (9) auf der gleichen Zeitachse die augenblickliche Korrelation, berechnet durch die erwähnten Korrelationsberechnungsmittel (83, 84), anzeigt.

**Revendications**

1.  Procédé d'analyse de sons ou de vibrations pour identifier laquelle parmi des sources de vibrations, qui sont des points candidats présents dans diverses sections d'un dispositif de direction assistée électrique équipant une automobile, provoque le bruit généré à l'intérieur de l'habitacle de l'automobile qui apparaît au niveau d'un point d'évaluation en périphérie d'un volant de direction, comprenant :

    une première étape (S2) d'extraction d'un signal de forme d'onde d'évaluation à partir d'un résultat de détection de sons ou de vibrations au niveau du point d'évaluation ;
    une deuxième étape (S2) d'extraction d'une pluralité de signaux de forme d'onde candidats ayant le même axe des temps que le signal de forme d'onde d'évaluation à partir de résultats de détection respectifs de sons ou de vibrations au niveau de la pluralité de points candidats ;
    une troisième étape (S3) de déduction d'une ondelette mère à partir du signal de forme d'onde d'évaluation extrait à la première étape (S2) ; et
    une quatrième étape (S4, S5) de réalisation d'une transformation en ondelettes sur chacun de la pluralité de signaux de forme d'onde candidats extraits à la deuxième étape (S2) en utilisant l'ondelette mère déduite à la troisième étape (S3) de façon à obtenir une corrélation instantanée entre chaque signal de forme d'onde candidat et l'ondelette mère.

2.  Procédé d'analyse de sons ou de vibrations selon la revendication 1, comprenant en outre :

    une cinquième étape (S6, S7) de fourniture en sortie du degré de contribution de chacun de la pluralité de points candidats pour les sons ou les vibrations du point d'évaluation sur la base d'une comparaison mutuelle de la corrélation instantanée obtenue à la quatrième étape (S4, S5).

3.  Procédé d'analyse de sons ou de vibrations selon les revendications 1 ou 2, dans lequel l'ondelette mère déduite à la troisième étape (S3) est une ondelette mère de type complexe.

4.  Procédé d'analyse de sons ou de vibrations selon la revendication 1, dans lequel la troisième étape (S3) comprend en outre les étapes suivantes :

    une étape (S11) de réalisation d'un traitement de fenêtre de Hanning sur le signal de forme d'onde d'évaluation ;
    une étape (S12) de réalisation d'une transformation de Fourier ;
    une étape (S13) de réalisation d'une normalisation ; et
    une étape (S14) de réalisation d'une transformation de Hilbert.

5.  Procédé d'analyse de sons ou de vibrations selon la revendication 1, dans lequel la quatrième étape (S4) comprend un processus d'obtention d'un produit intérieur entre une fonction de transformation à laquelle chacun des signaux de forme d'onde candidats est appliqué et l'ondelette mère déduite du signal d'évaluation à la troisième étape (S3).

6.  Dispositif d'analyse de sons ou de vibrations pour identifier une source de génération de sons ou de vibrations qui apparaît au niveau d'un point d'évaluation dans un espace cible, parmi une pluralité de points candidats situés dans l'espace cible et en périphérie, adapté à mettre en oeuvre le procédé d'analyse selon l'une quelconque des revendications 1 à 5, comprenant :

    des moyens de détection (6, 7) de sons ou de vibrations, agencés au niveau du point d'évaluation et de chacun de la pluralité de points candidats ;
    des premiers moyens d'extraction (80) pour extraire un signal de forme d'onde d'évaluation à partir du résultat de détection des moyens de détection (6) agencés au niveau du point d'évaluation ;
    des deuxièmes moyens d'extraction (81) pour extraire une pluralité de signaux de forme d'onde candidats, ayant le même axe des temps que le signal de forme d'onde d'évaluation, à partir des résultats de détection respectifs des moyens de détection (7) agencés au niveau de la pluralité de points candidats ;
    des moyens de déduction (82) pour déduire une ondelette mère à partir du signal de forme d'onde d'évaluation extrait par les premiers moyens d'extraction (80) ;
    des moyens de calcul de corrélation (83, 84) pour réaliser une transformation en ondelettes sur chacun de la pluralité de signaux de forme d'onde candidats extraits par les deuxièmes moyens d'extraction (81) en utilisant l'ondelette mère déduite par les moyens de déduction (82), de façon à calculer une corrélation instantanée entre chaque signal de forme d'onde candidat et l'ondelette mère ; et

des moyens de sortie (9) pour fournir le degré de contribution de chacun de la pluralité de points candidats pour les sons ou les vibrations du point d'évaluation sur la base d'une comparaison mutuelle des résultats de calcul des moyens de calcul de corrélation (83, 84).

7. Dispositif d'analyse de sons et de vibrations selon la revendication 6, dans lequel l'ondelette mère déduite est une ondelette mère de type complexe.

8. Dispositif d'analyse de sons ou de vibrations selon l'une quelconque des revendications 6-7, dans lequel les moyens de sortie (9) affichent sur le même axe des temps la corrélation instantanée calculée par les moyens de calcul de corrélation (83, 84).

FIG. 1

...

FIG. 2

FIG. 3

```
        ┌─────────────┐
        │    START    │
        └──────┬──────┘
               │
   ┌───────────┴───────────────────┐
   │  ACQUIRE NOISE DETECTION SIGNAL│ S1
   │  AND VIBRATION DETECTION SIGNALS│
   └───────────┬───────────────────┘
               │
   ┌───────────┴───────────────────┐
   │  EXTRACT EVALUATION WAVEFORM SIGNAL│ S2
   │  AND CANDIDATE WAVEFORM SIGNALS│
   └───────────┬───────────────────┘
               │
   ┌───────────┴───────────────────┐
   │      DERIVE MOTHER WAVELET     │ S3
   └───────────┬───────────────────┘
               │
   ┌───────────┴───────────────────┐
   │  PERFORM WAVELET TRANSFORMATION ON│ S4
   │  CANDIDATE WAVEFORM SIGNALS    │
   └───────────┬───────────────────┘
               │
   ┌───────────┴───────────────────┐
   │  CALCULATE INSTANTANEOUS CORRELATION│ S5
   │  BETWEEN CANDIDATE WAVEFORM SIGNALS│
   │  AND MOTHER WAVELET            │
   └───────────┬───────────────────┘
               │
   ┌───────────┴───────────────────┐
   │  COMPARE INSTANTANEOUS CORRELATION│ S6
   │  VALUES                        │
   └───────────┬───────────────────┘
               │
   ┌───────────┴───────────────────┐
   │  OUTPUT DEGREE OF CONTRIBUTION │ S7
   └───────────┬───────────────────┘
               │
        ┌──────┴──────┐
        │     END     │
        └─────────────┘
```

EVALUATION WAVEFORM SIGNAL S

FIG. 4A

TIME

CANDIDATE WAVEFORM SIGNAL $V_1$

FIG. 4B

TIME

CANDIDATE WAVEFORM SIGNAL $V_2$

FIG. 4C

TIME

CANDIDATE WAVEFORM SIGNAL $V_3$

FIG. 4D

TIME

FIG. 5

```
        ( DERIVATION OF MOTHER WAVELET )

        ┌────────────────────────────────┐
        │ HANNING WINDOW PROCESSING ON   │ S11
        │ EVALUATION WAVEFORM SIGNAL     │
        └────────────────────────────────┘

        ┌────────────────────────────────┐
        │    FOURIER TRANSFORMATION      │ S12
        └────────────────────────────────┘

        ┌────────────────────────────────┐
        │        NORMALIZATION           │ S13
        └────────────────────────────────┘

        ┌────────────────────────────────┐
        │    HILBERT TRANSFORMATION      │ S14
        └────────────────────────────────┘

        ┌────────────────────────────────┐
        │  COMPLEX TYPE MOTHER WAVELET   │ S15
        └────────────────────────────────┘

               ( RETURN )
```

F I G. 6 A

CANDIDATE WAVEFORM
0.392 SIGNAL V₁

1.0883

F I G. 6 B

CANDIDATE WAVEFORM
SIGNAL V₂

0.39

0.47046

F I G. 6 C

CANDIDATE WAVEFORM
SIGNAL V₃

0.392

0.78956

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7243906 A

- JP H1194642 A